# EUROPÄISCHE PATENTSCHRIFT

(11) **EP 1 652 650 B1**
(45) Veröffentlichungstag und Bekanntmachung des Hinweises auf die Patenterteilung: **04.06.2008**
(21) Anmeldenummer: 05109423.3
(22) Anmeldetag: 11.10.2005
(51) Int. Cl.: B29C 47/90, B29C 47/34, B29C 47/92

(54) **Stützvorrichtung sowie Verfahren zum Verändern eines Stützbereiches einer Stützvorrichtung**
Support device and method for varying a support region of a support device
Dispositif de support et procédé pour varier la zone de support dans un dispositif de support

(30) Priorität: 29.10.2004 DE 102004052973
(43) Veröffentlichungstag der Anmeldung: 03.05.2006
(73) Patentinhaber: Battenfeld Extrusionstechnik GmbH, 32547 Bad Oeynhausen (DE)
(72) Erfinder: Dohmann, Heinrich, 37671 Höxter (DE); Witt, Reinhard, 32547 Bad Oeynhausen (DE); Mickley, Ralf, 33719 Bielefeld (DE); Kreth, Norbert, Dr., 32429 Minden (DE)

(56) Entgegenhaltungen:
- DE-A1- 19 843 340
- DE-U1-7202004 008 10
- GB-A- 670 708
- JP-A- 2001 287 258
- US-A- 3 980 418

## Beschreibung

Die Erfindung betrifft eine Stützvorrichtung für ein Kunststoffprofil, insbesondere für ein Kunststoffrohr, in einer Kalibriereinrichtung die einen Stützbereich aufweist, in dem sie das Kunststoffprofil stützt, wobei die Kontur im Stützbereich der Kontur des Kunststoffprofiles angepaßt ist.

Stützvorrichtungen sind dem Fachmann bekannt und kommen im allgemeinen in Kalibratoren zum Einsatz

Bei DE 198 43 340 A1 wird eine Vielzahl von Lamellen radial verstellt und somit der um die Mittelachse vorherrschende Raum verkleinert oder vergrößert. Der an den Lamellen ausgeführte Radius ist hierbei konstant. Gemäß DE 20 2004 008 107 U1 wird mittels einer Spindel ein Segment (mit konstantem Radius) radial zugestellt, was gleichermaßen auch die US 670,708 vorschlägt.

Diese Stützscheiben werden beim Wechsel des Produktes ausgetauscht und durch Scheiben mit einem anderen Radius ersetzt. Dies bedeutet wiederum, dass für jedes zu produzierende Produkt entsprechend angepaßte Stützscheiben vorrätig sein müssen. Bei der Rohrextrusion werden somit Scheiben für unterschiedliche Rohrdurchmesser bereitgehalten. Dies erhöht den Lagerbedarf sowie die Rüstzeit, da wie oben beschrieben die Scheiben gewechselt werden.

**Aufgabe** der Erfindung ist es, eine Stützvorrichtung anzubieten, die es ermöglicht, auf den aufwendigen Wechsel der Scheiben zu verzichten. Weiterhin wird die Aufgabe gestellt, ein entsprechendes Verfahren zum abhängigen Verändern des Stützbereiches anzubieten.

Diese Aufgabe wird in Verbindung mit dem Oberbegriff des Anspruches 1 durch die Sützvorrichtung gemäß Anspruch 1 oder Anspruch 3 sowie durch das Verfahren gemäß Anspruch 8. Die Stützvorrichtung wird durch eine Aneinanderreihung mehrerer Scheiben mit unterschiedlichem Radius um einen gemeinsamen Drehachse gebildet. Je nach dem, welche Scheibe am Rohr anliegt, wird ein anderer Radius zum Einklang gebracht. Über den gemeinsamen Drehachse kann individuell jede Scheibe angelegt werden.

Um einen weitgehendst kontinuierlichen Übergang zwischen den Scheiben bzw. dem Konturbereich der Scheibe zu schaffen, sind die einzelnen Scheiben im Stützbereich untereinander verbunden und der Stützbereich bildet eine gemeinsame Fläche, wodurch die Kontur kontinuierlich veränderbar ist. Dies kann beispielsweise ein Blech oder ähnliches sein.

Weiterbildungsgemäß wird vorgeschlagen, die Stützvorrichtung einstückig auszuführen, wobei jeder Schnitt durch einen gemeinsamen Drehachse einen anderen Radius im Stützbereich aufweist und die Kontur kontinuierlich veränderbar ist.

Damit die Stützvorrichtung einfach verstellt werden kann ist vorgesehen, ein Verstellung um den gemeinsamen Drehachse anzuordnen.

Fortbildungsgemäß hat die Verstellung eine Markierung, über die der eingestellt Radius ablesbar ist. Bei Einsatz in einem Tank wird dies von außen ermöglicht, es ist also eine Abdichtung gegen Vakuum sowie gegen die Kühlflüssigkeit vorgesehen.

Damit die Verstellung in Verbindung mit der Steuerung einer Extrusionsanlage eingesetzt werden kann, wird vorgeschlagen, dass die Verstellung elektrisch erfolgt.

Die Stützvorrichtung mit elektrischer Verstellung eignet sich insbesondere zum Anpassen der Einstellung bei einer integrierten Meßeinrichtung, insbesondere einer Onlinemessung. Werden am extrudierten Rohr Abweichungen vom Solldurchmesser festgestellt, wird die Stützvorrichtung entsprechend verstellt, um den gewünschten Solldurchmesser zu erreichen.

Es wird vorgeschlagen, einen Stützbereich einer Stützvorrichtung in Abhängigkeit eines vorbestimmten Solldurchmessers einer oder mehrerer hintereinander angeordneten Stützvorrichtungen mit kontinuierlich veränderbarem Stützbereich derart in ihrer Lage zu verändern, dass der vorbestimmte Durchmesser erzeugt wird, wobei die Veränderung der Lage um einen Drehachse erfolgt. Besonders vorteilhaft ist es, wenn dies in Abhängigkeit von einem Meßergebnis am extrudierten Rohr erfolgt.

Es kann somit über den Verlauf der Kalibrierung an unterschiedlichen Stellen der Stützbereich angepasst werden, damit am Ende der Extrusionsline exakt das Rohr mit dem gewünschten Durchmesser produziert wird.

In den Zeichnungen ist ein Ausführungsbeispiel der Erfindung schematisch dargestellt, es zeigt
- Fig. 1: ein Scheibe mit einem großen Radius
- Fig. 2: eine Scheibe mit einem kleine Radius
- Fig. 3: die Anordnung mehrerer Scheiben
- Fig. 4: Figur 3 mit einer gemeinsamen Fläche
- Fig. 5: die einstückige Ausführung

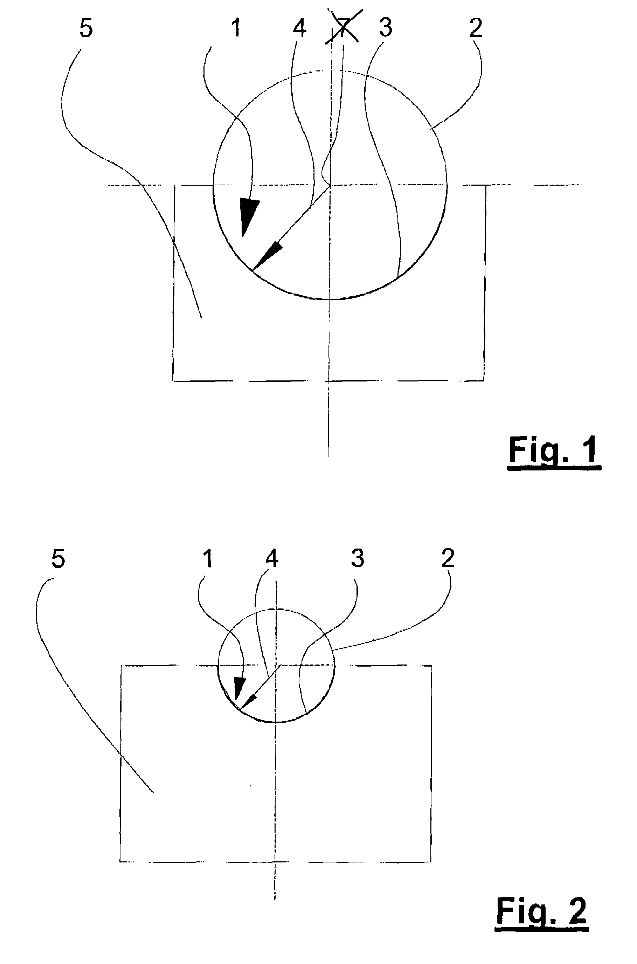

Figur 1 zeigt eine Scheibe 5 mit einem Stützbereich 1, die eine Kontur 3 mit einem bestimmten Radius 4 abbildet und ein Kunststoffprofil 2 stützt. Derartige Scheiben werden heute in Kalibratoren eingesetzt. Die Figur 2 zeigt eine ähnliche Scheibe 5 wie in Figur 1 mit dem unterschied, dass der Radius 4 der Kontur 3 im Stützbereich 1 sich von dem Radius 4 gemäß Figur 1 unterscheidet.

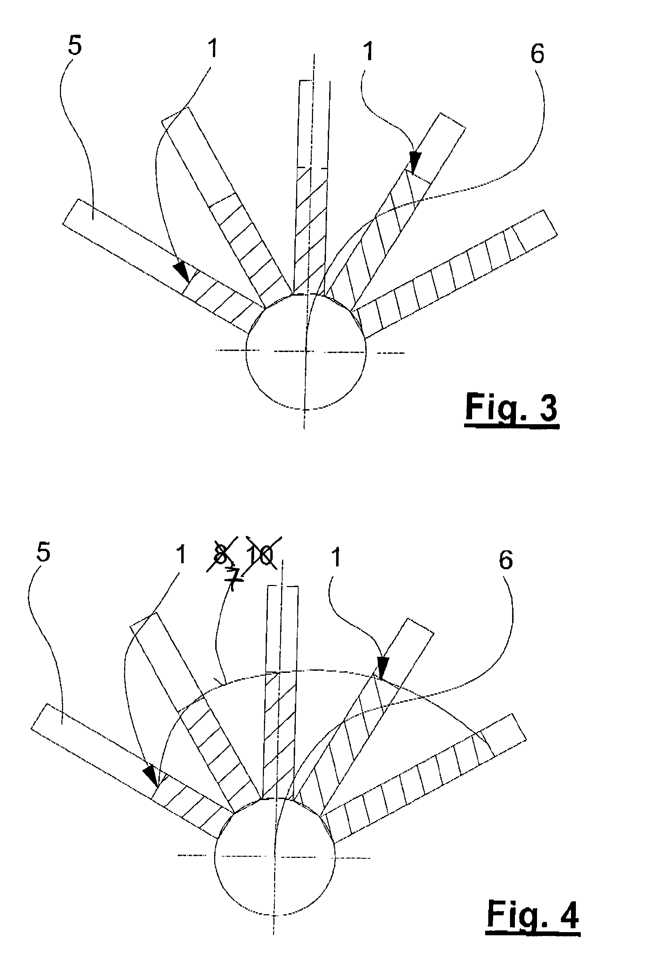

Mehrere dieser Scheiben 5 sind um einen gemeinsamen Drehachse 6, der beispielsweise durch ein Rohr gebildet wird, in Figur 3 dargestellt. Hier ist wiederum an jeder Scheibe 5 der Stützbereich 1 erkennbar. Dieser Stützbereich 1 ist in Figur 4 über ein Blech 7 verbunden, so dass eine gemeinsame Fläche entsteht, über die der Stützbereich gebildet wird.

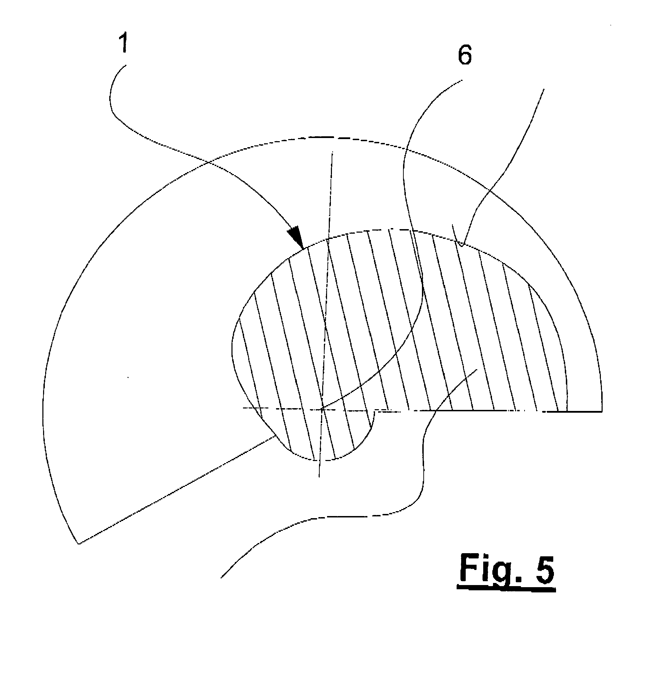

Alle Einzelteile gemäß Figur 4 sind quasi in einer einstückigen Ausführung gemäß Figur 5 realisiert. Der Stützbereich 1 wird hier über eine kontinuierlich veränderte Fläche gebildet. Die Steigung und somit die Größe der Radiusveränderung über den Winkel um den gemeinsamen Drehachse 6 ist dabei selbstverständlich individuell auslegbar und über den Kurvenverlauf bestimmbar. Wird ein sehr großer Bereich benötigt, bei dem zusätzlich eine sehr feine Veränderung erforderlich ist, kann die Ausführung gemäß Figur 5 auch als ein Vollkreis ausgeführt sein.

### Bezugszeichenliste:

- 1: Stützbereich
- 2: Kunststoffprofil
- 3: Kontur
- 4: Radius
- 5: Scheibe
- 6: gemeinsamer Drehachse
- 7: Blech

## Patentansprüche

1. Stützvorrichtung für ein eine Längsachse aufweisendes Kunststoffprofil (2), insbesondere für ein Kunststoffrohr, in einer Kalibriereinrichtung,
wobei die Stützvorrichtung einen Stützbereich (1) aufweist, mit dem das Kunststoffprofil (2) gestützt werden kann, und
wobei die Kontur (3) des Stützbereiches (1) der Kontur des zu stützenden Kunststoffprofils (2) angepasst ist,
**dadurch gekennzeichnet,**
**dass** der Stützbereich (1) durch mindestens zwei Scheiben (5) mit jeweiligen Konturen (3) gebildet wird,
wobei die Konturen (3) der mindestens zwei Scheiben (5) unterschiedlich groß sind und
wobei eine der Scheiben (5) durch Drehung des Stützbereichs (1) um eine zur Längsachse des Kunststoffprofils (2) senkrechte Achse (6) in Stützposition für das Kunststoffprofil (2) gebracht werden kann, wodurch die Kontur (3) des Stützbereichs (1) an die Größe des Kunststoffprofils (2) anpassbar ist.

2. Stützvorrichtung nach Anspruch 1, **dadurch gekennzeichnet, dass** die Stützbereiche (1) der einzelnen Scheiben (5) über ein Blech (7) miteinander verbunden sind, um eine gemeinsame Fläche zu formen, die den Stützbereich (1) bildet,

3. Stützvorrichtung für ein eine Längsachse aufweisendes Kunststoffprofil (2), insbesondere für ein Kunststoffrohr, in einer Kalibriereinrichtung,
wobei die Stützvorrichtung einen Stützbereich (1) aufweist, mit dem das Kunststoffprofil (2) gestützt werden kann, und
wobei die Kontur (3) des Stützbereiches (1) der Kontur des zu stützenden Kunststoffprofils (2) angepasst ist,
**dadurch gekennzeichnet,**
**dass** der Stützbereich (1) einstückig ausgeführt ist,
wobei die Kontur (3) bei Drehung um eine zur Längsachse des Kunststoffprofils (2) senkrenchte Achse (6) kontinuierlich veränderbar ist.

4. Stützvorrichtung nach Anspruch 1, 2 oder 3, **dadurch gekennzeichnet, dass** jeder Schnitt durch die senkrechte Achse (6) einen anderen Radius (4) im Stützbereich (1) aufweist.

5. Stützvorrichtung nach einem der Ansprüche 1 bis 4, **dadurch gekennzeichnet, dass** die Stützvorrichtung eine Verstellung aufweist.

6. Stützvorrichtung nach Anspruch 5, **dadurch gekennzeichnet, dass** an der Verstellung eine Markierung vorgesehen ist, über die der eingestellte Radius ablesbar ist.

7. Stützvorrichtung nach mindestens einem der vorigen Ansprüche, **dadurch gekennzeichnet, dass** die Verstellung elektrisch erfolgt.

8. Verfähren zum Verändern eines Stützbereiches (1) einer Stützvorrichtung nach Anspruch 2 oder 3, bei dem in Abhängigkeit cines vorbestimmten Solldurchmessers eine oder mehrere hintereinander angeordnete Stützvorrichtungen mit kontinuierlich veränderbarem Stützbereich (1) derart in ihrer Lage verändert werden, dass der vorbestimmte Durchmesser in Stützposition gebracht wird, wobei die Veränderung der Lage um eine zur Längsachse des Kunststoffprofils (2) senkrechte Achse (6) erfolgt.

9. Verfahren nach Anspruch 8, **dadurch gekennzeichnet, dass** die Veränderung der Lage in Abhängigkeit eines Messergebnisscs am extrudierten Rohr erfolgt.

## Claims

1. Supporting device for a plastic profile (2) having a longitudinal axis, in particular for a plastic tube, in a calibration device, wherein the supporting device has a supporting region (1), with which the plastic profile (2) may be supported, and wherein the contour (3) of the supporting region (1) is adapted to the contour of the plastic profile (2) to be supported, **characterised in that** the supporting region (1) is formed by at least two discs (5) having particular contours (3), wherein the contours (3) of the at least two discs (5) have different size and wherein one of the discs (5) may be brought into supporting position for the plastic profile (2) by rotating the supporting region (1) about an axis (6) which is vertical to the longitudinal axis of the plastic profile (2), as a result of which the contour (3) of the supporting region (1) can be adapted to the size of the plastic profile (2).

2. Supporting device according to claim 1, **characterised in that** the supporting regions (1) of the individual discs (5) are connected to one another via a metal sheet (7) in order to shape a common surface which forms the supporting region (1).

3. Supporting device for a plastic profile (2) having a longitudinal axis, in particular for a plastic tube, in a calibration device, wherein the supporting device has a supporting region (1), with which the plastic profile (2) may be supported, and wherein the contour (3) of the supporting region (1) is adapted to the contour of the plastic profile (2) to be supported, **characterised in that** the supporting region (1) is made in one piece, wherein the contour (3) can be changed continuously on rotation about an axis (6) which is vertical to the longitudinal axis of the plastic profile (2).

4. Supporting device according to claim 1, 2 or 3, **characterised in that** each section through the vertical axis (6) has a different radius (4) in the supporting region (1).

5. Supporting device according to one of claims 1 to 4, **characterised in that** the supporting device has adjustment.

6. Supporting device according to claim 5, **characterised in that** a marking, via which the set radius can be read, is provided on the adjustment.

7. Supporting device according to at least one of the previous claims, **characterised in that** the adjustment is effected electrically.

8. Process for changing a supporting region (1) of a supporting device according to claim 2 or 3, in which the position of one or more supporting devices arranged one behind another with continuously changeable supporting region (1) are changed as a function of a predetermined theoretical diameter such that the predetermined diameter is brought into supporting position, wherein the change in position is effected about an axis (6) which is vertical to the longitudinal axis of the plastic profile (2).

9. Process according to claim 8, **characterised in that** the change of position is effected as a function of a measured result on the extruded tube.

## Revendications

1. Dispositif de support pour un profilé de matériau synthétique (2) présentant un axe longitudinal, en particulier pour un tube de matériau synthétique, dans un dispositif de calibrage, dans lequel le dispositif de support présente une zone de support (1), qui permet de soutenir le profilé de matériau synthétique (2), et le contour (3) de la zone de support (1) est ajusté sur le contour du profilé de matériau synthétique à supporter, **caractérisé en ce que** la zone de support (1) est formée d'au moins deux plaques (5) avec des contours respectifs (3), les contours (3) des au moins deux plaques (5) étant de taille différente et l'une des plaques (5) pouvant être amenée en position de support pour le profilé de matériau synthétique (2) par rotation de la zone de support (1) autour d'un axe (6) perpendiculaire à l'axe longitudinal du profilé de matériau synthétique (2), ce qui permet d'ajuster le contour (3) de la zone de support (1) sur la taille du profilé en matériau synthétique (2).

2. Dispositif de support selon la revendication 1, **caractérisé en ce que** les zones de support (1) des plaques individuelles (5) sont reliées l'une à l'autre via une tôle pour former une surface commune qui constitue la zone de support (1).

3. Dispositif de support pour un profilé de matériau synthétique (2) présentant un axe longitudinal, en particulier pour un tube de matériau synthétique, dans un dispositif de calibrage, dans lequel le dispositif de support présente une zone de support (1) qui permet de soutenir le profilé de matériau synthétique (2), et dans lequel le contour (3) de la zone de support (1) est ajusté sur le contour du profilé de matériau synthétique à soutenir (2), **caractérisé en ce que** la zone de support (1) est réalisée d'un seul tenant, le contour (3) étant modifiable en continu par rotation autour d'un axe (6) perpendiculaire à l'axe longitudinal du profilé de matériau synthétique (2).

4. Dispositif de support selon la revendication 1, 2 ou 3, **caractérisé en ce que** chaque coupe selon l'axe perpendiculaire (6) présente un autre rayon (4) dans la zone de support (1).

5. Dispositif de support selon l'une quelconque des revendications 1 à 4, **caractérisé en ce que** le dispositif de support présente un dispositif de réglage.

6. Dispositif de support selon la revendication 5, **caractérisé en ce que** le dispositif de réglage est pourvu d'un repère qui permet de lire le rayon ajusté.

7. Dispositif de support selon au moins l'une quelconque des revendications précédentes, **caractérisé en ce que** le réglage se fait électriquement.

8. Procédé de modification d'une zone de support (1) d'un dispositif de support selon la revendication 2 ou 3, dans lequel, en fonction d'un diamètre théorique prédéterminé, on modifie la position d'un ou plusieurs dispositifs de support agencés l'un derrière l'autre et pourvus d'une zone de support modifiable en continu (1) de sorte que le diamètre prédéterminé soit amené en position de support, la modification de la position s'effectuant autour d'un axe (6) perpendiculaire à l'axe longitudinal du profilé de matériau synthétique (2).

9. Procédé selon la revendication 8, **caractérisé en ce que** la modification de la position s'effectue en fonction d'un résultat de mesure sur le tube extrudé.
